# EUROPEAN PATENT APPLICATION

(11) **EP 2 538 702 A1**
(43) Date of publication of application: **26.12.2012**
(21) Application number: 11744442.2
(22) Date of filing: 05.01.2011
(51) Int. Cl.: H04W 4/02, G01C 21/00, G01S 5/14, G08G 1/005, G08G 1/13, G09B 29/10, H04W 64/00

(54) **POSITIONING TIME INTERVAL CONTROL DEVICE AND POSITIONING TIME INTERVAL CONTROL METHOD**

(30) Priority: 17.02.2010 JP 2010032580
(71) Applicant: NTT DOCOMO, INC., Chiyoda-ku Tokyo 100-6150 (JP)
(72) Inventor: TAKAHASHI, Makoto, Tokyo 100-6150 (JP); HASHIMOTO, Jun, Tokyo 100-6150 (JP); ITAGAKI, Kentaro, Tokyo 100-6150 (JP)
(74) Representative: Maury, Richard Philip
(86) International application number: PCT/JP2011/050060
(87) International publication number: WO 2011/102151

(57) **Abstract**

A positioning time interval control device for controlling a time interval for measuring a position includes an obtaining unit configured to obtain a movement state and a movement speed of a mobile terminal, and a positioning time interval setting unit configured to set the time interval for measuring the position of the mobile terminal and a time interval for outputting position information derived from the measurement based on the movement state and the movement speed of the mobile terminal obtained by the obtaining unit. The positioning time interval setting unit changes the time intervals when the movement state and/or the movement speed of the mobile terminal is changed. At the time interval set by the positioning time interval setting unit, the mobile terminal obtains the position information of the mobile terminal and outputs the position information.

## Description

### TECHNICAL FIELD

The present invention relates to a mobile terminal including a positioning capability.

### BACKGROUND ART

Recently, a user having a mobile terminal can receive various services. One of the services is to receive various types of information suitable for the user's current position and/or time.

For example, when a user arrives at the airport, information about the time of departure or arrival, the boarding gate, and so on of the flight reserved by the user can be distributed to the user. Alternatively, when a user takes notes of favorite shops, a notification is automatically provided as the user approaches one of the shops.

In order to receive such services, position information of a user has to be reported to the service provider. For example, positioning (position measurement) is performed at predetermined time intervals, and position information derived as a result of the positioning is reported to the service provider (for example, see Japanese Patent Laid-Open Publication No. 2005-309513). For example, reporting position information of a user to a service provider at predetermined time intervals may be referred to as "auto-GPS".

### DISCLOSURE OF INVENTION

### [PROBLEM(S) TO BE SOLVED BY THE INVENTION]

In a mobile terminal, it is determined whether the mobile terminal is moving or stationary. As a result of the determination, when it is determined that the mobile terminal is moving, positioning is performed at predetermined time intervals and then position information derived as a result of the positioning is reported. While position information is reported when it is determined that the mobile terminal is moving, position information is not reported when it is determined that the mobile terminal is stationary, thereby reducing power. That is, when it is determined that the mobile terminal is stationary, position information is not reported, and thus power consumption can be reduced. For example, when it is determined that the mobile terminal is moving, positioning is periodically performed at time intervals of five minutes and the positioning result is reported.

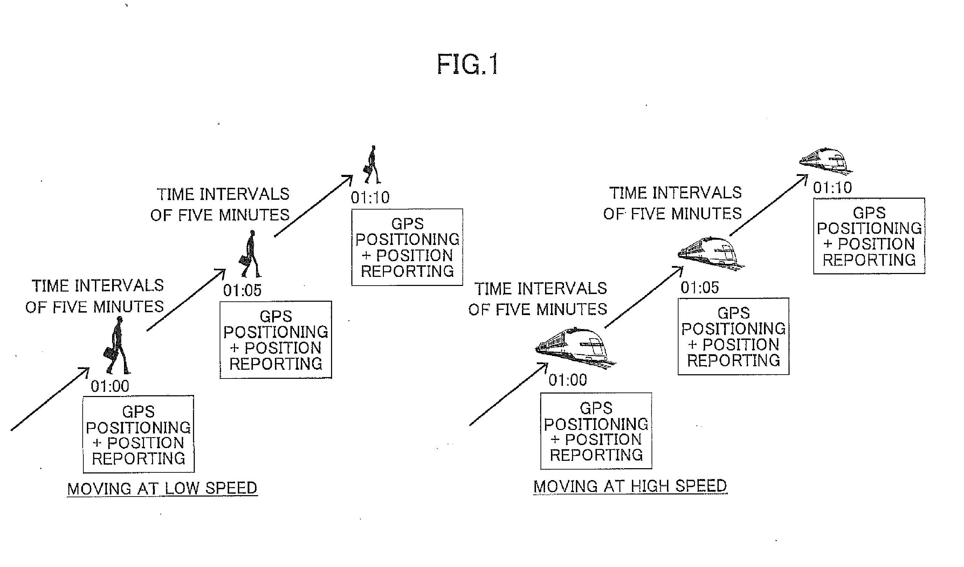

Fig. 1 shows an example of reporting position information in a mobile terminal.

When it is determined that the mobile terminal is moving, positioning is performed at the same time intervals, even if the mobile terminal is moving at a high speed or a low speed, and position information derived as a result of the positioning is reported. For example, moving at a low speed includes user's walking and moving at a high speed includes user's riding on a train.

However, the time intervals at which position information is reported are not important for a service provider, if the service provider knows a movement state indicative of whether the mobile terminal is moving at a high speed or a low speed and/or a movement speed. This is because the service provider can distribute suitable information according to the movement state, if the service provider knows the movement state and/or the movement speed.

In view of the problem associated with the related art, it is a general object of the present invention to provide a positioning time interval control device and a positioning time interval control method which are capable of controlling a time interval for performing positioning and a time interval for reporting a position according to a movement state and/or a movement speed.

### [MEANS FOR SOLVING THE PROBLEM(S)]

In one aspect of the present invention, there is provided a positioning time interval control device for controlling a time interval for measuring a position, comprising:
an obtaining unit configured to obtain a movement state and a movement speed of a mobile terminal; and
a positioning time interval setting unit configured to set the time interval for measuring the position of the mobile terminal and a time interval for outputting position information derived from the measurement based on the movement state and the movement speed of the mobile terminal obtained by the obtaining unit; wherein
the positioning time interval setting unit changes the time intervals when the movement state and/or the movement speed of the mobile terminal is changed; and
at the time interval set by the positioning time interval setting unit, the mobile terminal obtains the position information of the mobile terminal and outputs the position information.

In another aspect of the present invention, there is provided a positioning time interval control method in a positioning time interval control device for controlling a time interval for measuring a position, comprising the steps of:
obtaining a movement state and a movement speed of a mobile terminal; and
setting the time interval for measuring the position of the mobile terminal and a time interval for outputting position information derived from the measurement based on the movement state and the movement speed of the mobile terminal obtained in the obtaining step; wherein
the setting step comprises changing the time intervals when the movement state and/or the movement speed of the mobile terminal is changed; and
at the time interval set in the setting step, the mobile terminal obtains the position information of the mobile terminal and outputs the position information.

### [ADVANTAGEOUS EFFECT OF THE INVENTION]

According to a disclosed positioning time interval control device and a disclosed positioning time interval control method, a time interval for performing positioning and a time interval for reporting a position can be changed according to a movement state and/or a movement speed.

### BRIEF DESCRIPTION OF THE DRAWINGS

Fig. 1 shows a diagram illustrating time intervals at which position information is reported.
Fig. 2 shows an overall diagram of an exemplary system according to an embodiment of the present invention.
Fig. 3 shows a functional block diagram of a mobile terminal according to an embodiment of the present invention.
Fig. 4 shows a functional block diagram of a mobile terminal according to an embodiment of the present invention.
Fig. 5 shows an example of detecting a movement state of a user in a system according to an embodiment of the present invention.
Fig. 6 shows an example of detecting a movement speed of a user in a system according to an embodiment of the present invention.
Fig. 7 shows a diagram illustrating time intervals at which position information is reported in a system according to an embodiment of the present invention.
Fig. 8 shows a first flowchart of operations in a system according to an embodiment of the present invention.
Fig. 9 shows a second flowchart of operations in a system according to an embodiment of the present invention.
Fig. 10 shows a functional block diagram of a service provider apparatus according to an embodiment of the present invention.
Fig. 11 shows a functional block diagram of a mobile terminal according to an embodiment of the present invention.
Fig. 12 shows a flowchart of operations in a system according to an embodiment of the present invention.
Fig. 13 shows a first flowchart of operations in a system according to a further embodiment of the present invention.
Fig. 14 shows a second flowchart of operations in a system according to a further embodiment of the present invention.
Fig. 15 shows a relationship between an example of setting a positioning time interval and a movement state and a movement speed of a user in a system according to an embodiment of the present invention.
Fig. 16 shows an example of determining a movement state and a movement speed of a user in a system according to the present invention.

### DETAILED DESCRIPTION OF THE PREFERRED EMBODIMENTS

Embodiments of the present invention are described below with reference to the accompanying drawings.

Throughout the figures for illustrating the embodiments of the present invention, the same reference numerals are used for the same or equivalent elements and their repeated descriptions may be omitted.

### <Embodiment>

### <System>

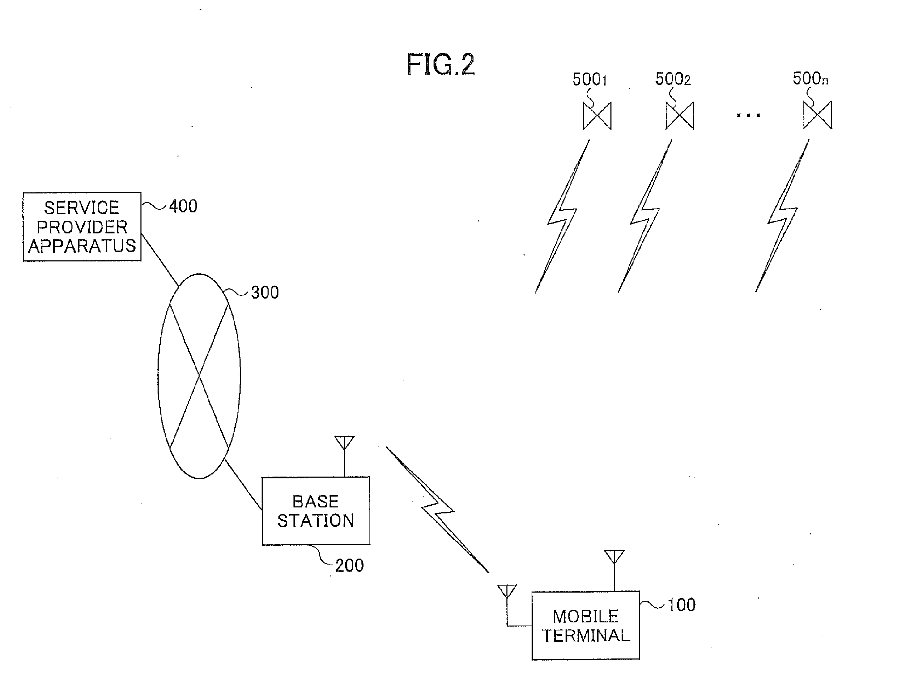

Fig. 2 shows an exemplary system in which a mobile terminal 100 is used according to an embodiment of the present invention.

The mobile terminal 100 is wirelessly connected to a base station 200. The base station 200 is connected to a communication network 300. The base station 200 may be in a wireless connection with the communication network 300 or in a wired connection with the communication network 300. For a wired connection, an optical connection may be used. In addition, the communication network 300 is connected to a service provider apparatus 400 for providing services to the mobile terminal 100.

The mobile terminal 100 includes a positioning time interval control device. The positioning time interval control device determines whether the mobile terminal 100 is moving. When the positioning time interval control device determines that the mobile terminal 100 is moving, the positioning time interval control device determines a movement state. The movement state includes a walking state, a riding-in-car state, and a riding-on-train state. These are mere examples of the movement state and the movement state may include two of the walking state, the riding-in-car state, and the riding-on-train state. In addition, a vehicle, such as a motorcycle or a bicycle, other than a car and a train may be used. The transportation means indicated with the movement state may be modified or determined as appropriate. This embodiment is described assuming that the movement state includes the walking state, the riding-in-car state, and the riding-on-train state as an example.

In addition, the positioning time interval control device determines whether the transportation means indicated with the movement state is in a low speed movement state or in a high speed movement state. In the following descriptions, information about whether the transportation means indicated with the movement state is in a low speed movement state or in a high speed movement state is referred to as "movement speed information". Another movement state may exist between the low speed movement state and the high speed movement state. In addition, a larger number of movement states may be used. This embodiment is described assuming that the transportation means indicated with the movement state is categorized into a low speed movement state or a high speed movement state as an example.

The positioning time interval control device sets a time interval for performing positioning (position measurement) and a time interval for outputting position information derived as a result of the positioning. The time interval for outputting position information includes a time interval for reporting position information. For example, a time interval used by a mobile terminal in a high speed movement state for performing positioning may be set longer than a time interval used by a mobile terminal used by a mobile terminal in a low speed movement state for performing positioning. Alternatively, for example, a time interval used by a mobile terminal in a high speed movement state for reporting position information may be set longer than a time interval used by a mobile terminal in a low speed movement state for reporting position information.

The mobile terminal 100 measures the position of the mobile terminal 100 based on positioning signals transmitted from GPS satellites 500₁-500ₙ (n is an integer larger than 3). The position is measured according to the time interval for performing positioning. Position information may be expressed by latitude and longitude. Currently, approximately thirty GPS satellites orbit around the earth at an altitude of about 20,000 km. There are six orbital planes around the earth, each inclined at a 55-degree angle. Four or more GPS satellites which are equally spaced are positioned on each orbital plane. Accordingly, when the sky is clear, at least five GPS satellites can always be observed at any position on the earth.

The mobile terminal 100 outputs position information derived from the positioning as well as the movement state and the movement speed of the mobile terminal 100. For example, the mobile terminal 100 transmits position information as well as the movement state and the movement speed of the mobile terminal 100 to the service provider apparatus 400.

The service provider apparatus 400 provides services to the mobile terminal 100 which has reported the position information, the movement state, and the movement speed. For example, the service provider apparatus 400 may estimate a user's action based on the position information, the movement state, and the movement speed. Specifically, when the position information reported by the mobile terminal 100 is near a railroad, the movement state is the riding-on-train state, and the movement speed is a high speed, the service provider apparatus 400 can determine that the user is moving by super express train or limited express train. When it is determined that the user is moving by super express train or limited express train, the time interval for performing positioning and the time interval for reporting position information, the movement state, and the movement speed are set longer than a default value or an initial value. The service provider apparatus 400 can distribute content suitable for the user's situation, even though the time intervals are set longer. The content may include content about reading materials or content about travel, for example, because it is estimated that the user is making a trip. When it is determined that the user gets off the train and starts walking, the time interval for performing positioning and the time interval for reporting position information, the movement state, and the movement speed are reset to the default value or the initial value.

### <Mobile terminal>

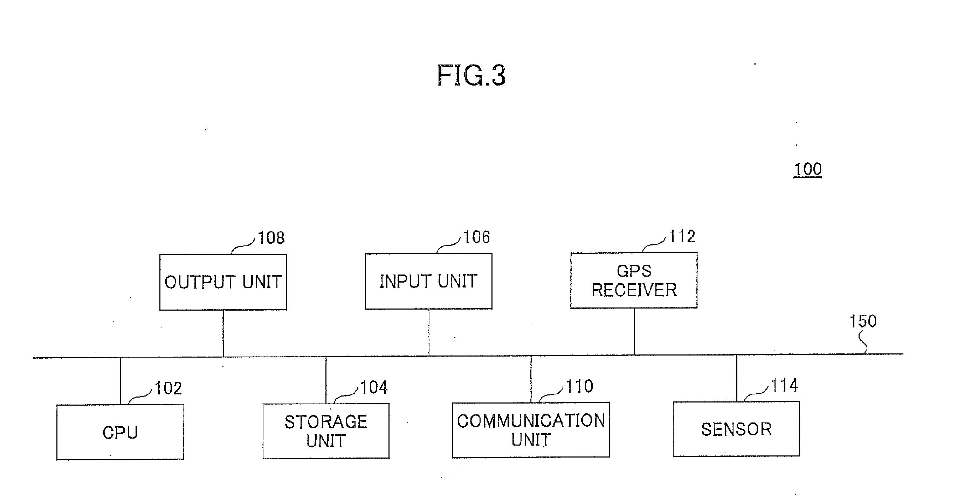

Fig. 3 shows a mobile terminal 100 according to this embodiment. Fig. 3 mainly shows hardware components of the mobile terminal 100.

The mobile terminal 100 includes a central processing unit (CPU) 102, a storage unit 104, an input unit 106, an output unit 108, a communication unit 110, a GPS (global positioning system) receiver 112, and a sensor 114. Each functional block is connected to a bus 150. This embodiment is described with reference to the mobile terminal 100 as an example. However, this embodiment is not limited to the mobile terminal 100 but is applicable to any apparatus which includes a positioning capability and is capable of outputting position information derived from the positioning. For example, this embodiment is applicable to a PDA (personal digital assistant) or the like.

The central processing unit 102 controls the storage unit 104, the input unit 106, the output unit 108, the communication unit 110, the GPS receiver 112, and the sensor 114. The central processing unit 102 functions according to programs stored in the storage unit 104 and performs predetermined processing.

The storage unit 104 includes an application and an operating system (OS). The application is software including functions for a user's operation on the mobile terminal 100. The operating system is software for providing interfaces to the application which abstract hardware in the mobile terminal 100.

The input unit 106 includes a keyboard and a mouse, for example. The input unit 106 is a device for inputting instructions or data to the mobile terminal 100. The input device 106 may include a touch panel. When the input device 106 includes a touch panel, instructions or data are input to the mobile terminal 100 via the touch panel. The instructions include instructions for the operating system or for the application.

The output unit 108 includes a display, for example. The output unit 108 displays a processing status or a processing result by the mobile terminal 100. The processing status or the processing result includes a processing status or a processing result by the operating system or by the application. The display includes a liquid crystal display, a CRT (cathode ray tube) display, a PDP (plasma display panel) display, an organic EL (Electro-Luminescence) display, and so on.

Under the control of the central processing unit 102, the communication unit 110 performs radio communications with the base station 200 according a predetermined radio communication scheme. The radio communication scheme may include W-CDMA (Wideband CDMA) or LTE (Long Term Evolution). The communication unit 110 inputs to the central processing unit 102 information about the serving base station covering the area within which the mobile terminal is situated. For example, when the serving base station is changed, the communication unit 110 inputs to the central processing unit 102 information about a target base station after handover. Alternatively, the communication unit 110 may provide a notification to the central processing unit 102 at predetermined time intervals.

The GPS receiver 112 measures the position of the mobile terminal 100 according to a control signal (positioning command) input from the central processing unit 102. For example, the GPS receiver 112 calculates respective distances (pseudo distances) from plural GPS satellites 500₁-500ₙ to the GPS receiver 112 by receiving radio waves from the plural GPS satellites 500₁-500ₙ. The GPS receiver 112 performs positioning of the mobile terminal 100 including the GPS receiver 112 based on the pseudo distances. The positioning result may be expressed by latitude and longitude. More specifically, signals transmitted from the GPS satellites 500₁-500ₙ arrive at the GPS receiver 112 with delay corresponding to the amount of time required for radio waves to travel the distances between the GPS satellites 500₁-500ₙ and the GPS receiver 112. Thus, when the amount of time required for radio waves to travel is calculated for plural GPS satellites 500₁-500ₙ, the position of the GPS receiver 112 can be calculated according to positioning operations. For example, based on radio waves transmitted from plural GPS satellites 500₁-500ₙ, a distance-measuring unit in the GPS receiver 112 calculates a distance from each of the GPS satellites 500₁-500ₙ to the GPS receiver 112. Based on the distance calculated by the distance-measuring unit, the position of the GPS receiver 112 can be calculated. The GPS receiver 112 inputs position information to the CPU 102.

The sensor 114 includes a sensor capable of obtaining information for determining whether a user carrying the mobile terminal 100 is walking. For example, the sensor 114 may include a pedometer and/or an accelerometer. In addition, the sensor includes a sensor capable of obtaining information for determining a vehicle where a user carrying the mobile terminal 100 is riding. Specifically, the sensor 114 may include an accelerometer.

### <Functions of a mobile terminal>

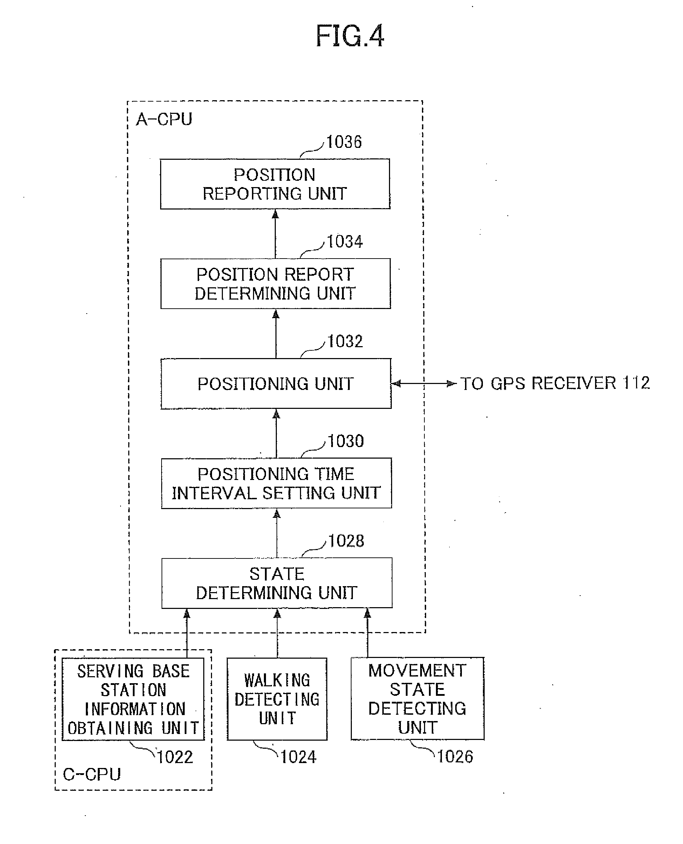

Fig. 4 shows a functional block diagram of the mobile terminal 100. Fig. 4 mainly shows functions performed by the central processing unit 102.

The processing performed by the mobile terminal 100 includes processing for determining whether the mobile terminal 100 is moving. The processing performed by the mobile terminal 100 also includes processing for determining a movement state when it is determined that the mobile terminal 100 is moving. The processing performed by the mobile terminal 100 also includes processing for determining a movement speed according to the movement state. The processing performed by the mobile terminal 100 also includes processing for determining for performing positioning based on the movement state and the movement speed. The processing performed by the mobile terminal 100 also includes processing for measuring the position of the mobile terminal 100 according to the time interval for performing positioning based on positioning signals transmitted from the GPS satellites 500₁-500ₙ. The processing performed by the mobile terminal 100 also includes processing for determining whether the positioning result as well as the movement state and the movement speed of the mobile terminal 100 should be transmitted to the service provider apparatus 400. The processing performed by the mobile terminal 100 also includes processing for transmitting the positioning result as well as the positioning state of the mobile terminal 100 to the service provider apparatus 400 according to the determination result by the determining processing.

The mobile terminal 100 includes a serving base station information obtaining unit 1022. The serving base station information obtaining unit 1022 obtains information about the serving base station covering the area within which the mobile terminal 100 is situated. For example, when the mobile terminal 100 performs handover and the serving base station is changed, the serving base station information obtaining unit 1022 may obtain information about the serving base station. Alternatively, the serving base station information obtaining unit 1022 may obtain information at predetermined time intervals. The serving base station information obtaining unit 1022 inputs the information about the serving base station to a state determining unit 1028. Assuming that information about the serving base station is obtained at the predetermined time intervals, the serving base station information obtaining unit 1022 may input the information about the serving base station to the state determining unit 1028, when the obtained information about the serving base station is changed (when the current serving base station is different from the previous serving base station).

The mobile terminal 100 includes a walking detecting unit 1024. The walking detecting unit 1024 determines whether the user carrying the mobile terminal 100 is walking. For example, acceleration information and/or pedometer count information is input from the sensor 114 to the walking detecting unit 1024. Based on the acceleration and/or the pedometer count information, the walking detecting unit 1024 determines whether the user is walking. For example, when information included in the acceleration information is less than a predetermined first threshold, the walking detecting unit 1024 may determine that the user is walking. The predetermined first threshold may be set to a value representing a low acceleration state. The value representing the low acceleration state may be acceleration in the case of walking. Alternatively, when the low acceleration state continues for a predetermined time length, the walking detecting unit 1024 may determine that the user is walking. Alternatively, when the travel distance reaches a predetermined distance based on the pedometer count information, the walking detecting unit 1024 may determine that the user is walking. When the walking detecting unit 1024 determines that the user is walking, the walking detecting unit 1024 inputs to the state determining unit 1028 walking information indicating that the user is walking. Unless the walking detecting unit 1024 determines that the user is walking, the walking detecting unit 1024 inputs no information to the state determining unit 1028. Alternatively, when the walking detecting unit 1024 does not determine that the user is walking, the walking detecting unit 1024 may input to the state determining unit 1028 information indicating that the user is not walking.

The mobile terminal 100 includes a movement state detecting unit 1026. The movement state detecting unit 1026 determines a movement state of the user carrying the mobile terminal 100. For example, acceleration information is input from the sensor 114 to the movement state detecting unit 1026. The movement state detecting unit 1026 determines the movement state of the user based on the acceleration information. When the movement state detecting unit 1026 determines that the user is moving by transportation means such as a car or a train, the movement state detecting unit 1026 inputs information about the transportation means to the state determining unit 1028. Unless the movement state detecting unit 1026 determines that the user is moving by transportation means, the movement state detecting unit 1026 inputs no information to the state determining unit 1028. Alternatively, when the movement state detecting unlit 1026 does not determine that the user is moving by transportation means, the movement state detecting unit 1026 may input to the state determining unit 1028 information indicating that the user is not moving by transportation means.

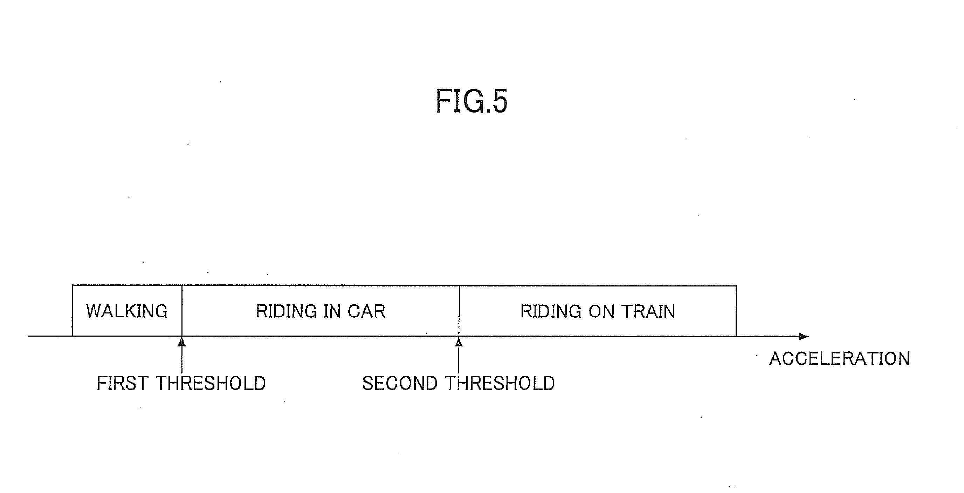

Fig. 5 shows an example of detecting the movement state of the user.

For example, based on the acceleration information, when acceleration is greater than or equal to the first threshold and less than a predetermined second threshold, the movement state detecting unit 1026 determines that the user is riding in a car. When acceleration is greater than or equal to the second threshold, the movement state detecting unit 1026 determines that the user is riding on a train. This is because acceleration is assumed to be higher when the user is riding on a train than when the user is riding in a car.

The mobile terminal 100 includes the state determining unit 1028. The information about the serving base station is input from the serving base station information obtaining unit 1022, the walking information is input as appropriate from the walking detecting unit 1024, and the movement state is input as appropriate from the movement state detecting unit 1026 to the state determining unit 1028. The phrase "as appropriate" is used because no information may be input. The state determining unit 1028 determines the number of times that the serving base station is changed during a predetermined time length based on the information about the serving base station, and then determines whether the mobile terminal 100 is moving at a high speed or a low speed based on the number of times. The state determining unit 1028 inputs the walking information or the movement state to a positioning time interval setting unit 1030. In addition, the state determining unit 1028 inputs to the positioning time interval setting unit 1030, as movement speed information of the user, the result of determining whether the mobile terminal 100 is moving at a high speed or a low speed.

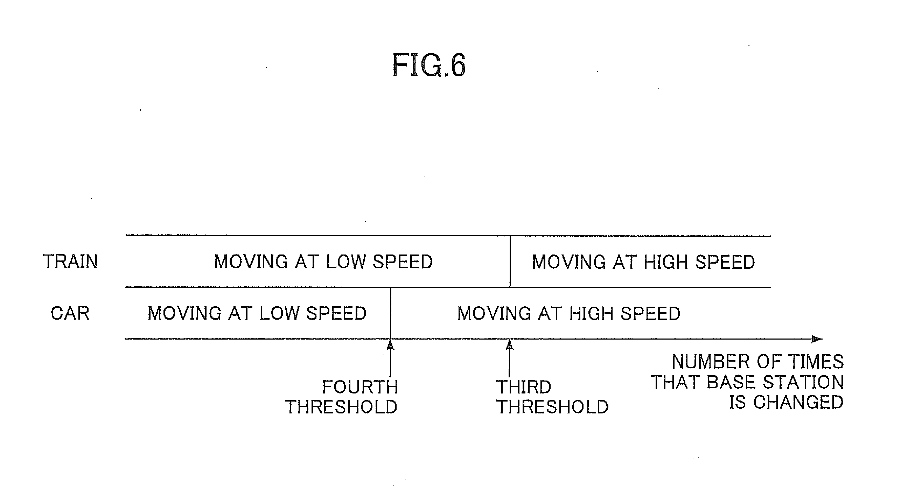

Fig. 6 shows an example of detecting the movement speed of the user.

For example, assuming that the movement state indicates that the user is riding on a train, when the number of times that the serving base station is changed during the predetermined time length is less than a predetermined third threshold based on the information about the serving base station, the state determining unit 1028 determines that the user is moving at a low speed. When the number of times that the serving base station is changed during the predetermined time length is greater than or equal to the predetermined third threshold, the state determining unit 1028 determines that the user is moving at a high speed. For example, assuming that the movement state indicates that the user is riding in a car, when the number of times that the serving base station is changed during the predetermined time length is less than a predetermined fourth threshold based on the information about the serving base station, the state determining unit 1028 determines that the user is moving at a low speed. When the number of times that the serving base station is changed during the predetermined time length is greater than or equal to the predetermined fourth threshold, the state determining unit 1028 determines that the user is moving at a high speed. Preferably, the fourth threshold is less than the third threshold. This is because it is preferable that the threshold used to determine whether the user is moving at a high speed in a train be different from the threshold used to determine whether the user is moving at a high speed in a car. From the viewpoint of reducing the workload, the fourth threshold may be equal to the third threshold. It is determined that the larger the number of times that the serving base station is changed during the predetermined time length, the higher the movement speed is. On the other hand, it is determined that the smaller the number of times that the serving base station is changed during the predetermined time length, the lower the movement speed is.

The mobile terminal 100 includes the positioning time interval setting unit 1030. The positioning time interval setting unit 1030 sets a time interval for performing positioning in the GPS receiver 112 based on the walking information or the movement state and the movement speed information of the user which are input from the state determining unit 1028. For example, the positioning time interval may be set longer in the order of walking, riding in a car moving at a low speed, riding in a car moving at a high speed, riding on a train at a low speed, and riding on a train at a high speed. The positioning time interval set by the positioning time interval setting unit 1030 is input to a positioning unit 1032 together with the walking information or the movement state and the movement speed information of the user.

The mobile terminal 100 includes the positioning unit 1032. The positioning unit 1032 inputs a positioning command to the GPS receiver 112. For example, the positioning unit 1032 inputs a positioning command to the GPS receiver 112 according to the positioning time interval set by the positioning time interval setting unit 1030. In addition, the positioning unit 1032 obtains position information derived as a result of positioning by the GPS receiver 112. The position information is input to a position report determining unit 1034 together with the walking information or the movement state and the movement speed information of the user.

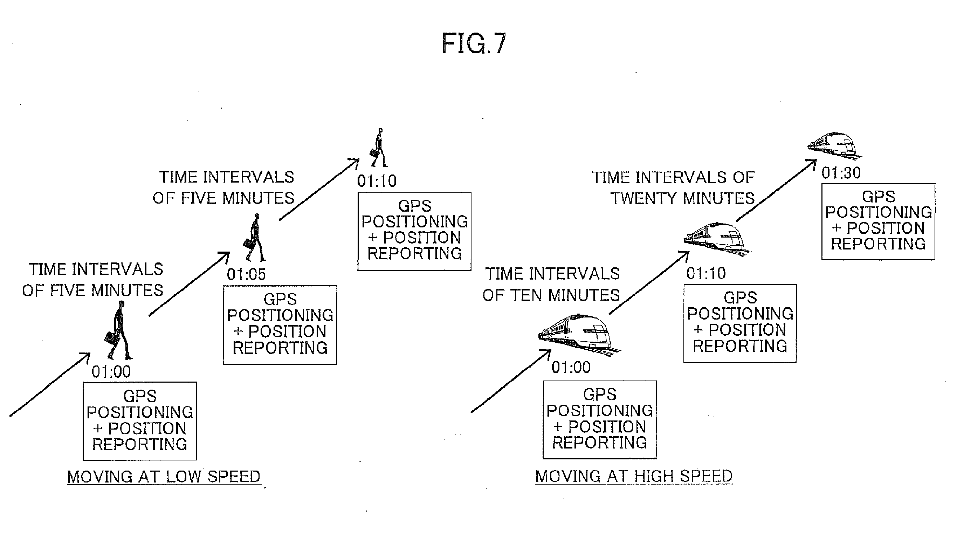

Fig. 7 shows an example of setting a time interval for performing positioning and a time interval for reporting position information in the mobile terminal 100 according to this embodiment.

According to the example shown in Fig. 7, when the user is moving at a low speed, for example, when the user is walking, a time interval for performing positioning and a time interval for reporting position information are set to a default value or an initial value. While the default value of five minutes is shown in Fig. 7 by way of example, the default value may be modified or determined as appropriate. When the user is moving at a high speed, for example, when the user is riding in a train, the time interval for performing positioning and the time interval for reporting position information are set longer than the default value. Fig. 7 shows an example of gradually increasing the time intervals such as the time interval of ten minutes and the time interval of twenty minutes. These time intervals are illustrated by way of example and may be modified or determined as appropriate.

The mobile terminal 100 includes the position report determining unit 1034. The position report determining unit 1034 temporarily stores position information obtained by the previous positioning operation. The position report determining unit 1034 compares new position information input from the positioning unit 1034 to the previous position information obtained by the previous positioning operation. When it is determined that the new position information indicates almost the same position as the previous position information, the position report determining unit 1034 determines that no position information should be reported. For example, when the position indicated by the new position information is within a predetermined range from the position indicated by the previous position information, it may be determined that the new position information indicates almost the same position as the previous position information. When it is not determined that the new position information indicates almost the same position as the previous position information, the position report determining unit 1034 determines that position information should be reported. For example, when the position indicated by the new position information is not within the predetermined range from the position indicated by the previous position information, it may be determined that the new position information indicates a different position from the previous position information. When the position report determining unit 1034 determines that position information should be reported, the position report determining unit 1034 inputs the new position information to a position reporting unit 1036 together with the walking information or the movement state and the movement speed information of the user. By determining that position information should be reported when it is determined that the new position information indicates a different position from the previous position information, power consumption of the mobile terminal 100 can be reduced. In addition, since the number of times that position information is reported can be decreased, traffic load in network facilities can be reduced.

The mobile terminal 100 includes the position reporting unit 1036. When the position information together with the walking information or the movement state and the movement speed information of the user is input from the position report determining unit 1034 to the position reporting unit 1036, the position reporting unit 1036 generates a position information report signal for reporting the position information. The position information report signal includes the position information of the mobile terminal 100, information about whether the user carrying the mobile terminal 100 is walking or moving by transportation means, and movement speed information indicating whether the user is moving at a high speed or a low speed when the user is moving by transportation means. For example, a flag is used to indicate the information about whether the user carrying the mobile terminal 100 is walking or moving by transportation means, and the movement speed information indicating whether the user is moving at a high speed or a low speed when the user is moving by transportation means. The position information report signal is transmitted from the communication unit 110 to the service provider apparatus 400.

The mobile terminal 100 may include plural CPUs. For example, among the functional blocks shown in Fig. 4, the serving base station information obtaining unit 1022 may be implemented in a C-CPU (Communication-GPU). The C-CPU is a CPU for controlling transmissions and controls communication operations such as connection to or disconnection from the base station or the switching equipment, for example. Among the functional blocks shown in Fig. 4, the state determining unit 1028, the positioning time interval setting unit 1030, the positioning unit 1032, the position report determining unit 1034, and the position reporting unit 1036 may be implemented in an A-CPU (Application-CPU). The A-CPU is a CPU for controlling applications and controls various application functions or user interfaces, for example. In addition, the state determining unit 1028 and the positioning time interval setting unit 1030 may be implemented as a positioning time interval control device.

### <Operations in a mobile terminal (first example)>

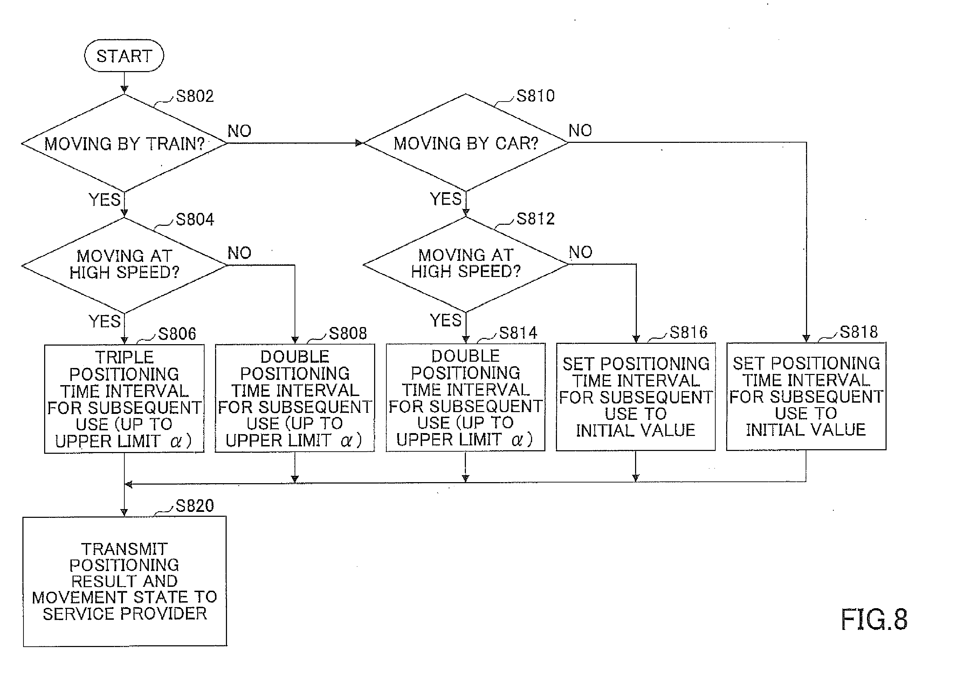

Fig. 8 shows a first flowchart of operations in the mobile terminal 100.

The following operations may be triggered at the timing of positioning by the mobile terminal 100. Alternatively, the following operations may be triggered when the movement state and/or the movement speed is changed in the state determining unit 1028.

The mobile terminal 100 determines whether the mobile terminal 100 is moving by train (step S802). For example, the movement state detecting unit 1026 determines the movement state of the user based on information input from the sensor 114. For example, when the sensor 114 includes an accelerometer, the movement state detecting unit 1026 determines, based on acceleration information, that the user is riding on a train if acceleration is greater than or equal to the predetermined second threshold.

When it is determined that the mobile terminal 100 is moving by train (step S802: YES), the mobile terminal 100 determines whether the mobile terminal 100 is moving at a high speed (step S804). For example, the state determining unit 1028 obtains the number of times that the serving base station is changed during the predetermined time length based on the information about the serving base station input from the serving base station information obtaining unit 1022, and then determines whether the mobile terminal 100 is moving at a high speed based on the number of times. For example, when the number of times that the serving base station is changed during the predetermined time length is greater than or equal to the predetermined third threshold, the state determining unit 1028 determines that the mobile terminal 100 is moving at a high speed.

When it is determined that the user carrying the mobile terminal 100 is riding on a train moving at a high speed (step S804: YES), the mobile terminal 100 increases the positioning time interval for subsequent use by three times (step S806). For example, when it is determined that the user carrying the mobile terminal 100 is riding on a train moving at a high speed, the positioning time interval setting unit 1030 triples the positioning time interval for subsequent use, compared to the current positioning time interval. In order to prevent the positioning time interval from being continuously increased, an upper limit α for the positioning time interval is used. Thus, the positioning time interval is increased up to the upper limit α.

On the other hand, when it is determined that the user carrying the mobile terminal 100 is riding on a train but the train is not moving at a high speed (step S804: NO), the mobile terminal 100 increases the positioning time interval for subsequent use by two times (step S808). For example, when the number of times that the serving base station is changed during the predetermined time length is less than the predetermined third threshold, the state determining unit 1028 determines that the user is moving at a low speed. When it is determined that the user carrying the mobile terminal 100 is riding on a train but the train is not moving at a high speed, the positioning time interval setting unit 1030 doubles the positioning time interval for subsequent use, compared to the current positioning time interval. In order to prevent the positioning time interval from being continuously increased, an upper limit α for the positioning time interval is used. Thus, the positioning time interval is increased up to the upper limit α.

In step S802, when it is determined that the mobile terminal 100 is not moving by train (step S802: NO), the mobile terminal 100 determines whether the mobile terminal 100 is moving by car (step S810). For example, the movement state detecting unit 1026 determines the movement state of the user based on information input from the sensor 114. For example, when the sensor 114 includes an accelerometer, the movement state detecting unit 1026 determines, based on acceleration information, that the user is riding in a car if acceleration is greater than or equal to the predetermined first threshold and less than the predetermined second threshold.

When it is determined that the mobile terminal 100 is moving by car (step S810: YES), the mobile terminal 100 determines whether the mobile terminal 100 is moving at a high speed (step S812). For example, the state determining unit 1028 obtains the number of times that the serving base station is changed during the predetermined time length based on the information about the serving base station input from the serving base station information obtaining unit 1022, and then determines whether the mobile terminal 100 is moving at a high speed based on the number of times. For example, when the number of times that the serving base station is changed during the predetermined time length is greater than or equal to the predetermined fourth threshold, the state determining unit 1028 determines that the mobile terminal 100 is moving at a high speed.

When it is determined that the user carrying the mobile terminal 100 is riding in a car moving at a high speed (step S812: YES), the mobile terminal 100 increases the positioning time interval for subsequent use by two times (step S814). For example, when it is determined that the user carrying the mobile terminal 100 is riding in a car moving at a high speed, the positioning time interval setting unit 1030 doubles the positioning time interval for subsequent use, compared to the current positioning time interval. In order to prevent the positioning time interval from being continuously increased, an upper limit α for the positioning time interval is used. Thus, the positioning time interval is increased up to the upper limit α.

On the other hand, when it is determined that the user carrying the mobile terminal 100 is riding in a car but the car is not moving at a high speed (step S812: NO), the mobile terminal 100 sets the positioning time interval for subsequent use to the initial value (step S816). For example, when the number of times that the serving base station is changed during the predetermined time length is less than the predetermined fourth threshold, the state determining unit 1028 determines that the user is moving at a low speed. When it is determined that the user carrying the mobile terminal 100 is riding in a car but the car is not moving at a high speed, the positioning time interval setting unit 1030 sets the positioning time interval for subsequent use to the initial value.

In step S810, when it is determined that the mobile terminal 100 is not moving by car (step S810: NO), the mobile terminal 100 sets the positioning time interval for subsequent use to the initial value (step S818). For example, when it is determined that the user carrying the mobile terminal 100 is not moving by car, the positioning time interval setting unit 1030 sets the positioning time interval for subsequent use to the initial value. For example, when it is determined that the user carrying the mobile terminal 100 is not moving by car, it is determined that the user is walking.

The mobile terminal 100 performs positioning according to the positioning time interval set in step S806, S808, S814, S816, or S818 and obtains position information. The mobile terminal 100 generates a position information report signal and transmits the position information report signal to the service provider apparatus 400 (step S820). For example, when it is determined that newly obtained position information does not indicate the same position as the previous position information, the position report determining unit 1034 determines that the newly obtained position information should be reported. When the position report determining unit 1034 determines that the newly obtained position information should be reported, the position reporting unit 1036 generates a position information report signal. The position information report signal includes the position information of the mobile terminal 100, information about whether the user carrying the mobile terminal 100 is walking or moving by transportation means, and information indicating whether the user is moving at a high speed or a low speed when the user is moving by transportation means. The mobile terminal 100 transmits the position information report signal to the service provider apparatus 400.

The operations in steps S802-S820 are performed according to a program by the central processing unit 102 included in the mobile terminal 100. A program which makes the central processing unit 102 function as the mobile terminal 100 is downloaded via the communication network 300, for example. Alternatively, the program may be provided as a storage medium such as a flexible disk, a CD-ROM, or a memory card. Assuming that the program is provided as a storage medium, the program stored in the storage medium is read when the storage medium is inserted into an auxiliary storage device of the mobile terminal 100. The central processing unit 102 writes the read program to a RAM or a HDD to perform the operations. The program makes a computer (central processing unit 102) in the mobile terminal 100 operate steps S802-S820 shown in Fig. 8. Alternatively, the program may make the computer operate at least part of steps S802-S820, for example.

### <Operations in a mobile terminal (second example)>

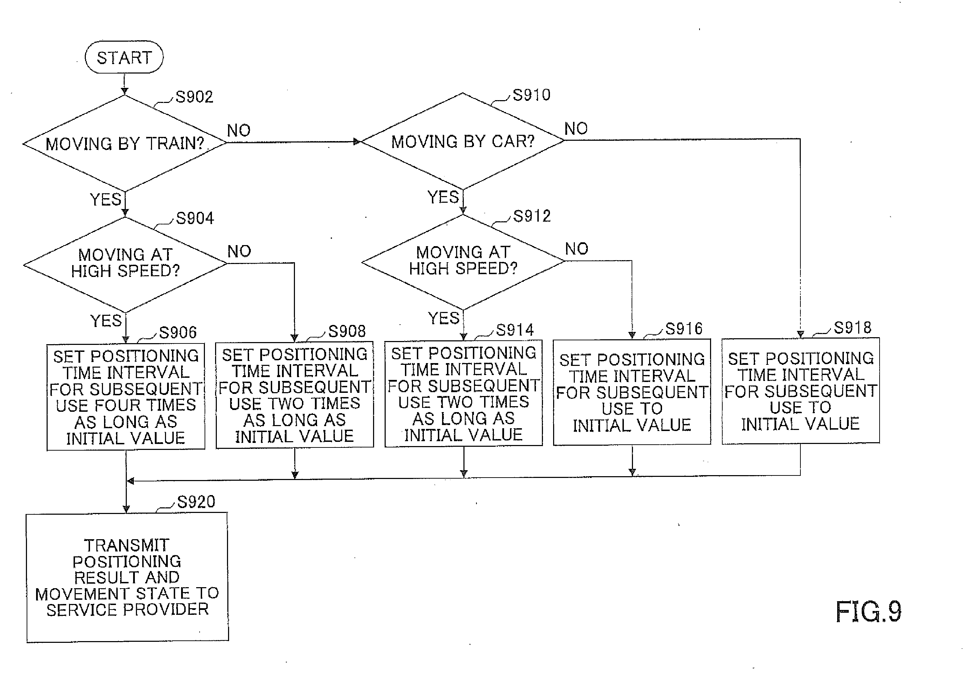

Fig. 9 shows a second flowchart of operations in the mobile terminal 100.

The following operations may be triggered at the timing of positioning by the mobile terminal 100. Alternatively, the following operations may be triggered when the movement state and/or the movement speed is changed in the state determining unit 1028.

In Fig. 9, steps S902-S904, S910-S912, and S920 are the same as steps S802-S804, S810-S812, and S820 described with reference to Fig. 8, respectively.

When it is determined that the user carrying the mobile terminal 100 is riding on a train moving at a high speed (step S904: YES), the mobile terminal 100 sets the positioning time interval for subsequent use four times as long as the initial value (step S906). For example, when it is determined that the user carrying the mobile terminal 100 is riding on a train moving at a high speed, the positioning time interval setting unit 1030 sets the positioning time interval for subsequent use four times as long as the initial value.

On the other hand, when it is determined that the user carrying the mobile terminal 100 is riding on a train but the train is not moving at a high speed (step S904: NO), the mobile terminal 100 sets the positioning time interval for subsequent use two times as long as the initial value (step S908). For example, when it is determined that the user carrying the mobile terminal 100 is riding on a train but the train is not moving at a high speed, the positioning time interval setting unit 1030 sets the positioning time interval for subsequent use two times as long as the initial value.

When it is determined that the user carrying the mobile terminal 100 is riding in a car moving at a high speed (step S912: YES), the mobile terminal 100 sets the positioning time interval for subsequent use two times as long as the initial value (step S914). For example, when it is determined that the user carrying the mobile terminal 100 is riding in a car moving at a high speed, the positioning time interval setting unit 1030 sets the positioning time interval for subsequent use two times as long as the initial value.

On the other hand, when it is determined that the user carrying the mobile terminal 100 is riding in a car but the car is not moving at a high speed (step S912: NO), the mobile terminal 100 sets the positioning time interval for subsequent use to the initial value (step S916). For example, when it is determined that the user carrying the mobile terminal 100 is riding in a car but the car is not moving at a high speed, the positioning time interval setting unit 1030 sets the positioning time interval for subsequent use to the initial value.

In step S910, when it is determined that the mobile terminal 100 is not moving by car (step S910: NO), the mobile terminal 100 sets the positioning time interval for subsequent use to the initial value (step S918). For example, when it is determined that the user carrying the mobile terminal 100 is not moving by car, the positioning time interval setting unit 1030 sets the positioning time interval for subsequent use to the initial value.

The operations in steps S902-S920 are performed according to a program by the central processing unit 102 included in the mobile terminal 100. The program makes a computer (central processing unit 102) in the mobile terminal 100 operate steps S902-S920 shown in Fig. 9. Alternatively, the program may make the computer operate at least part of steps S902-S920, for example.

According to this embodiment, a time interval for measuring the position of a mobile terminal and a time interval for reporting position information are appropriately set based on the movement state and the movement speed of the user carrying the mobile terminal. By setting the time interval for measuring the position of the mobile terminal, power consumption of the mobile terminal can be reduced, because the number of times that position information is reported can be decreased. Also, by setting the time interval for reporting position information, power consumption of the mobile terminal can be reduced. In addition, traffic load in network facilities can be reduced.

In addition, when it is determined that position information derived from the positioning result is the same as the previous position information, the position information is not reported. Thus, the number of times that position information is reported can be decreased. The time interval for measuring the position of the mobile terminal may be the same as or different from the time interval for reporting position information.

Furthermore, according to the present embodiment, position information can be reported to the service provider together with the movement state and the movement speed of the user carrying the mobile terminal. By reporting the movement state and the movement speed of the user carrying the mobile terminal to the service provider, the service provider can estimate the user's action. By estimating the user's action, the service provider can provide content suitable for the user's situation.

### <Modification>

In the embodiment as described above, the function for setting a positioning time interval may be included in the service provider apparatus 400 or another server (not shown) which is different from the service provider apparatus 400. This modification is described assuming that the function for setting a positioning time interval is included in the service provider server 400, for example.

### <Service provider apparatus>

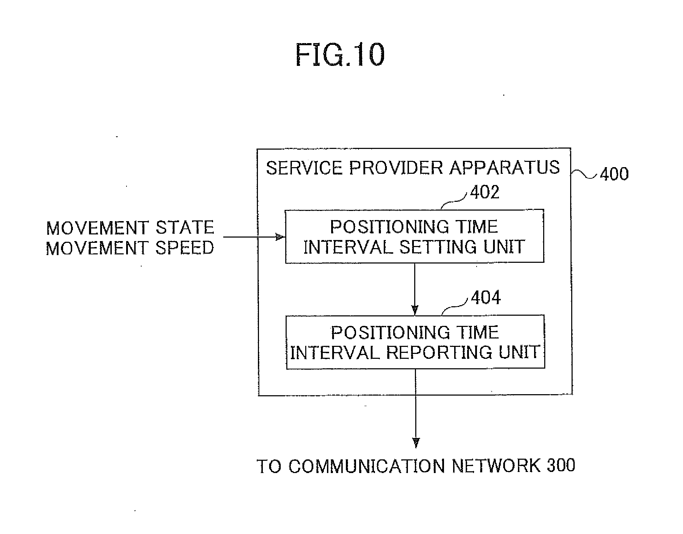

Fig. 10 shows a functional block diagram of a service provider apparatus 400 according to this modification.

The service provider apparatus 400 includes a positioning time interval control device.

The positioning time interval control device includes a positioning time interval setting unit 402. The positioning time interval setting unit 402 receives from the mobile terminal 100 walking information or the movement state and the movement speed of the user carrying the mobile terminal 100. The positioning time interval setting unit 402 sets a time interval for causing the mobile terminal 100 to perform positioning based on the walking information or the movement state and the movement speed of the user carrying the mobile terminal 100. For example, the positioning time interval may be set longer in the order of walking, riding in a car moving at a low speed, riding in a car moving at a high speed, riding on a train at a low speed, and riding on a train at a high speed. The positioning time interval set by the positioning time interval setting unit 402 is input to a positioning time interval reporting unit 404.

The positioning time interval control device includes the positioning time interval reporting unit 404. The positioning time interval reporting unit 404 transmits to the mobile terminal 100 the positioning time interval input from the positioning time interval setting unit 402. The positioning time interval is transmitted to the base station 200 via the communication network 300 and then transmitted to the mobile terminal 100.

### <Functions of a mobile terminal>

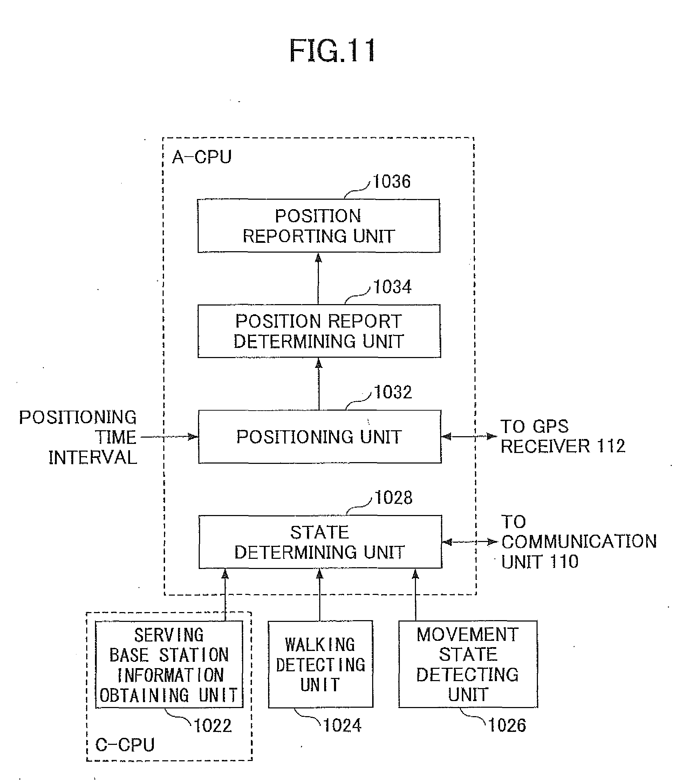

Fig. 11 shows a functional block diagram of the mobile terminal 100. Fig. 11 mainly shows functions performed by the central processing unit 102.

The functions of the state determining unit 1028, the positioning unit 1032, the position report determining unit 1034, and the position reporting unit 1036 in this mobile terminal 100 are different from those in the mobile terminal described with reference to Fig. 4. In addition, this mobile terminal 100 does not include the positioning time interval setting unit 1030.

The information about the serving base station is input from the serving base station information obtaining unit 1022, the walking information is input as appropriate from the walking detecting unit 1024, and the movement state is input as appropriate from the movement state detecting unit 1026 to the state determining unit 1028. The state determining unit 1028 determines the number of times that the serving base station is changed during a predetermined time length based on the information about the serving base station, and then determines whether the mobile terminal 100 is moving at a high speed or a low speed based on the number of times. The state determining unit 1028 inputs the walking information or the movement state to the communication unit 110. In addition, the state determining unit 1028 inputs to the communication unit 110, as movement speed information of the user, the result of determining whether the mobile terminal 100 is moving at a high speed or a low speed. The communication unit 110 transmits to the service provider apparatus 400 the walking information or the movement state and the movement speed information of the user input from the state determining unit 1028.

The positioning unit 1032 inputs a positioning command to the GPS receiver 112. For example, the positioning unit 1032 inputs a positioning command to the GPS receiver 112 according to the positioning time interval reported by the service provider apparatus 400. In addition, the positioning unit 1032 obtains position information derived as a result of positioning by the GPS receiver 112. The position information is input to the position report determining unit 1034. The walking information or the movement state and the movement speed information of the user are not input to the position report determining unit 1034, because they have been reported before the position information is reported. However, they may be reported again.

The position report determining unit 1034 temporarily stores position information obtained by the previous positioning operation. The position report determining unit 1034 compares new position information input from the positioning unit 1034 to the previous position information obtained by the previous positioning operation. When it is determined that the new position information indicates almost the same position as the previous position information, the position report determining unit 1034 determines that no position information should be reported. When it is not determined that the new position information indicates almost the same position as the previous position information, the position report determining unit 1034 determines that position information should be reported. When the position report determining unit 1034 determines that position information should be reported, the position report determining unit 1034 inputs the new position information to the position reporting unit 1036. By determining that position information should be reported only when it is not determined that the new position information indicates almost the same position as the previous position information, power consumption of the mobile terminal 100 can be reduced. In addition, since the number of times that position information is reported can be decreased, traffic load in network facilities can be reduced.

When the position information is input from the position report determining unit 1034 to the position reporting unit 1036, the position reporting unit 1036 generates a position information report signal for reporting the position information. The position information report signal includes the position information of the mobile terminal 100. The position information report signal is transmitted from the communication unit 110 to the service provider apparatus 400.

### <Operations in a mobile terminal>

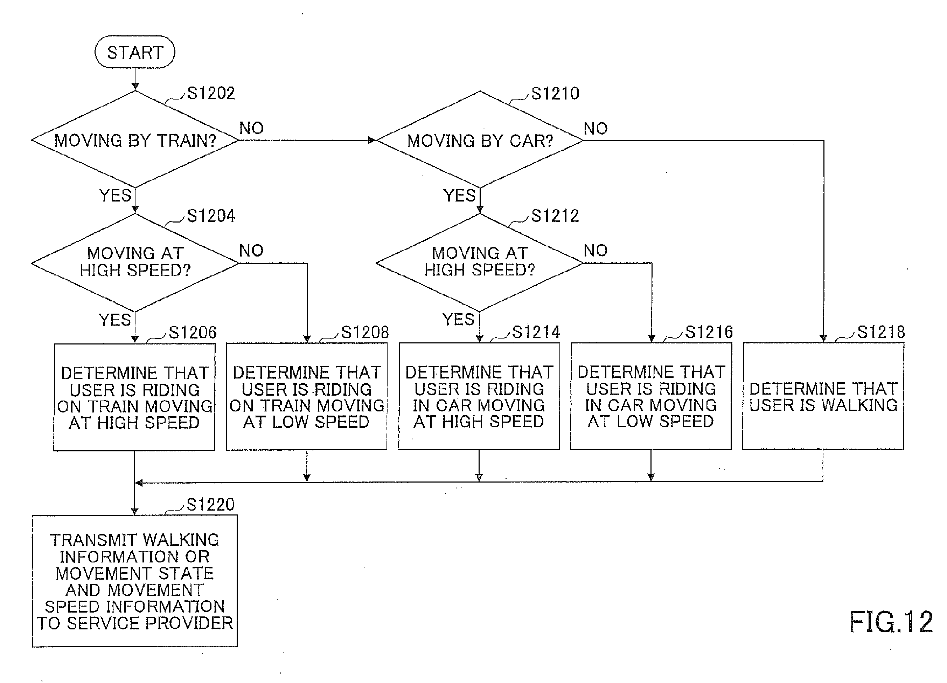

Fig. 12 shows a flowchart of operations in the mobile terminal 100.

The following operations may be triggered at the timing of positioning by the mobile terminal 100. Alternatively, the following operations may be triggered when the movement state and/or the movement speed is changed ip the state determining unit 1028.

In Fig. 12, steps S1202-S1204 and S1210-S1212 are the same as steps S802-S804 and S810-S812 described with reference to Fig. 8, respectively.

When it is determined that the user carrying the mobile terminal 100 is moving at a high speed (step S1204: YES), the mobile terminal 100 determines that the user is riding on a train moving at a high speed (step S1206). For example, the state determining unit 1208 determines that the user carrying the mobile terminal 100 is riding on a train moving at a high speed.

When it is not determined that the user carrying the mobile terminal 100 is moving at a high speed (step S1204: NO), the mobile terminal 100 determines that the user is riding on a train moving at a low speed (step S1208). For example, the state determining unit 1208 determines that the user carrying the mobile terminal 100 is riding on a train moving at a low speed.

When it is determined that the user carrying the mobile terminal 100 is moving at a high speed (step S1212: YES), the mobile terminal 100 determines that the user is riding in a car moving at a high speed (step S1214). For example, the state determining unit 1208 determines that the user carrying the mobile terminal 100 is riding in a car moving at a high speed.

When it is not determined that the user carrying the mobile terminal 100 is moving at a high speed (step S1212: NO), the mobile terminal 100 determines that the user is riding in a car moving at a low speed (step S1216). For example, the state determining unit 1208 determines that the user carrying the mobile terminal 100 is riding in a car moving at a low speed.

In step S1210, when it is determined that the mobile terminal 100 is not moving by car (step S1210: NO), the mobile terminal 100 determines that the user carrying the mobile terminal 100 is walking (step S1218). For example, the state determining unit 1028 determines that the user carrying the mobile terminal 100 is walking.

The mobile terminal transmits to the service provider apparatus 400 walking information or a movement state and movement speed information according to the determination result of step S1206, S1208, S1214, S1216, or S1218 (step S1220).

The operations in steps S1202-S1220 are performed according to a program by the central processing unit 102 included in the mobile terminal 100. The program makes a computer (central processing unit 102) in the mobile terminal 100 operate steps S1202-S1220 shown in Fig. 12. Alternatively, the program may make the computer operate at least part of steps S1202-S1220, for example.

### <Operations in a service provider apparatus (first example)>

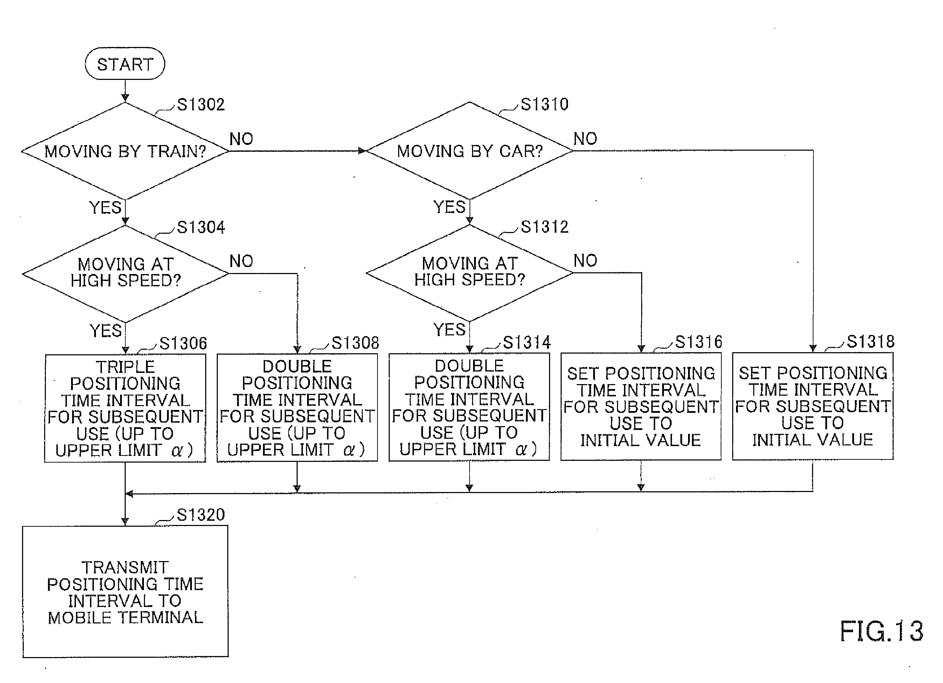

Fig. 13 shows a first flowchart of operations in the service provider apparatus 400.

The service provider apparatus 400 determines whether the mobile terminal 100 is moving by train (step S1302). For example, the positioning time interval setting unit 402 determines a movement state of the user based on information reported by the mobile terminal 100.

When it is determined that the mobile terminal 100 is moving by train (step S1302: YES), the service provider apparatus 400 determines whether the mobile terminal 100 is moving at a high speed (step S1304). For example, the positioning time interval setting unit 402 determines whether the mobile terminal 100 is moving at a high speed based on information reported by the mobile terminal 100.

When it is determined that the user carrying the mobile terminal 100 is riding on a train moving at a high speed (step S1304: YES), the service provider apparatus 400 increases the positioning time interval for subsequent use by three times (step S1306). For example, when it is determined that the user carrying the mobile terminal 100 is riding on a train moving at a high speed, the positioning time interval setting unit 402 triples the positioning time interval for subsequent use, compared to the current positioning time interval. In order to prevent the positioning time interval from being continuously increased, an upper limit α for the positioning time interval is used. Thus, the positioning time interval is increased up to the upper limit α.

On the other hand, when it is determined that the user carrying the mobile terminal 100 is riding on a train but the train is not moving at a high speed (step S1304: NO), the service provider apparatus 400 increases the positioning time interval for subsequent use by two times (step S1308). For example, when it is determined that the user carrying the mobile terminal 100 is riding on a train but the train is not moving at a high speed, the positioning time interval setting unit 402 doubles the positioning time interval for subsequent use, compared to the current positioning time interval. In order to prevent the positioning time interval from being continuously increased, an upper limit α for the positioning time interval is used. Thus, the positioning time interval is increased up to the upper limit α.

In step S1302, when it is determined that the mobile terminal 100 is not moving by train (step S1302: NO), the service provider apparatus 400 determines whether the mobile terminal 100 is moving by car (step S1310). For example, the positioning time interval setting unit 402 determines a movement state of the user based on information reported by the mobile terminal 100.

When it is determined that the mobile terminal 100 is moving by car (step S1310: YES), the service provider apparatus 400 determines whether the mobile terminal 100 is moving at a high speed (step S1312). For example, the positioning time interval setting unit 402 determines whether the mobile terminal 100 is moving at a high speed based on information reported by the mobile terminal 100.

When it is determined that the user carrying the mobile terminal 100 is riding in a car moving at a high speed (step S1312: YES), the service provider apparatus 400 increases the positioning time interval for subsequent use by two times (step S1314). For example, when it is determined that the user carrying the mobile terminal 100 is riding in a car moving at a high speed, the positioning time interval setting unit 402 doubles the positioning time interval for subsequent use, compared to the current positioning time interval. In order to prevent the positioning time interval from being continuously increased, an upper limit α for the positioning time interval is used. Thus, the positioning time interval is increased up to the upper limit α.

On the other hand, when it is determined that the user carrying the mobile terminal 100 is riding in a car but the car is not moving at a high speed (step S1312: NO), the service provider apparatus 400 sets the positioning time interval for subsequent use to the initial value (step S1316). For example, when it is determined that the user carrying the mobile terminal 100 is riding in a car but the car is not moving at a high speed, the positioning time interval setting unit 402 sets the positioning time interval for subsequent use to the initial value.

In step S1310, when it is determined that the mobile terminal 100 is not moving by car (step S1310: NO), the service provider apparatus 400 sets the positioning time interval for subsequent use to the initial value (step S1318). For example, when it is determined that the user carrying the mobile terminal 100 is not moving by car, the positioning time interval setting unit 402 sets the positioning time interval for subsequent use to the initial value. For example, when it is determined that the user carrying the mobile terminal 100 is not moving by car, it is determined that the user is walking.

The service provider apparatus 400 reports to the mobile terminal 100 the positioning time interval set in step S1306, S1308, S1314, S1316, or S1318 (step S1320). For example, the positioning time interval reporting unit 404 reports the positioning time interval to the mobile terminal 100.

The operations in steps S1302-S1320 are performed according to a program by a central processing unit (not shown) included in the service provider apparatus 400. The program makes a computer (central processing unit) in the service provider apparatus 400 operate steps S1302-S1320 shown in Fig. 13. Alternatively, the program may make the computer operate at least part of steps S1302-S1320, for example.

### <Operations in a service provider apparatus (second example)>

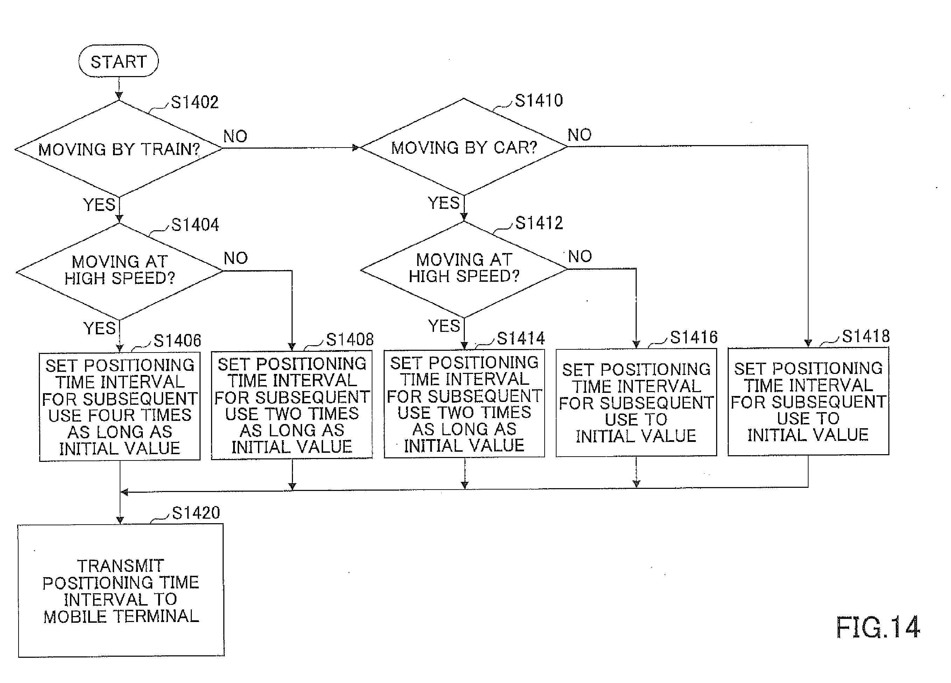

Fig. 14 shows a second flowchart of operations in the service provider apparatus 400.

In Fig. 14, steps S1402-S1404, S1410-S1412, and S1420 are the same as steps S1302-Sl3O4, S1310-S1312, and S1320 described with reference to Fig. 13, respectively.

When it is determined that the user carrying the mobile terminal 100 is riding on a train moving at a high speed (step S1404: YES), the service provider apparatus 400 sets the positioning time interval for subsequent use four times as long as the initial value (step S1406). For example, when it is determined that the user carrying the mobile terminal 100 is riding on a train moving at a high speed, the positioning time interval setting unit 402 sets the positioning time interval for subsequent use four times as long as the initial value.

On the other hand, when it is determined that the user carrying the mobile terminal 100 is riding on a train but the train is not moving at a high speed (step S1404: NO), the service provider apparatus 400 sets the positioning time interval for subsequent use two times as long as the initial value (step S1408). For example, when it is determined that the user carrying the mobile terminal 100 is riding on a train but the train is not moving at a high speed, the positioning time interval setting unit 402 sets the positioning time interval for subsequent use two times as long as the initial value.

When it is determined that the user carrying the mobile terminal 100 is riding in a car moving at a high speed (step S1412: YES), the service provider apparatus 400 sets the positioning time interval for subsequent use two times as long as the initial value (step S1414). For example, when it is determined that the user carrying the mobile terminal 100 is riding in a car moving at a high speed, the positioning time interval setting unit 402 sets the positioning time interval for subsequent use two times as long as the initial value.

On the other hand, when it is determined that the user carrying the mobile terminal 100 is riding in a car but the car is not moving at a high speed (step S1412: NO), the service provider apparatus 400 sets the positioning time interval for subsequent use to the initial value (step S1416). For example, when it is determined that the user carrying the mobile terminal 100 is riding in a car but the car is not moving at a high speed, the positioning time interval setting unit 402 sets the positioning time interval for subsequent use to the initial value.

In step S1410, when it is determined that the mobile terminal 100 is not moving by car (step S1410: NO), the service provider apparatus 400 sets the positioning time interval for subsequent use to the initial value (step S1418). For example, when it is determined that the user carrying the mobile terminal 100 is not moving by car, the positioning time interval setting unit 402 sets the positioning time interval for subsequent use to the initial value. For example, when it is determined that the user carrying the mobile terminal 100 is not moving by car, it is determined that the user is walking.

The service provider apparatus 400 reports to the mobile terminal 100 the positioning time interval set in step S1406, S1408, S1414, S1416, or S1418 (step S1420). For example, the positioning time interval reporting unit 404 reports the positioning time interval to the mobile terminal 100.

The operations in steps S1402-S1420 are performed according to a program by a central processing unit (not shown) included in the service provider apparatus 400. The program makes a computer (central processing unit) in the service provider apparatus 400 operate steps S1402-S1420 shown in Fig. 14. Alternatively, the program may make the computer operate at least part of steps S1402-S1420, for example.

In this embodiment, the positioning time interval may be set according to the walking information or the movement state and the movement speed.

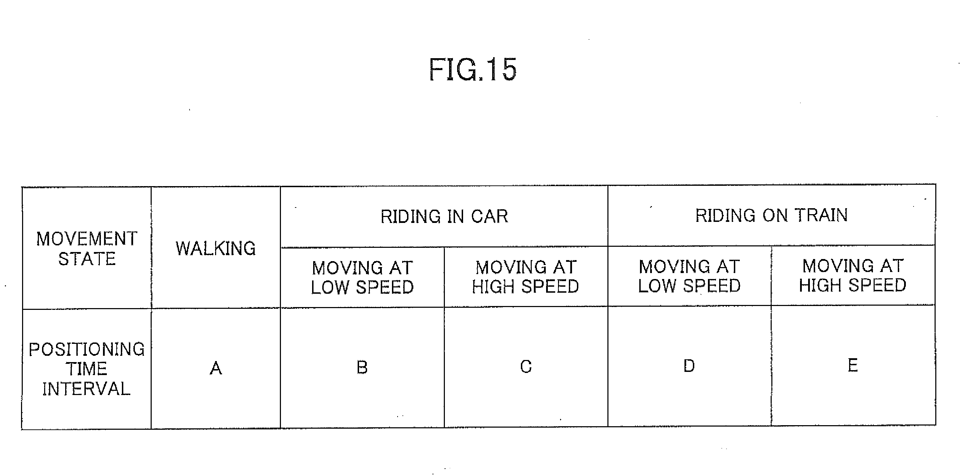

Fig. 15 shows an example of setting a positioning time interval.

When the walking information is input from the state determining unit 1028, the positioning time interval is set to A. When the movement state is input from the state determining unit 1028, the movement state is a riding-in-car state, and the movement speed of the user is a low speed, the positioning time interval is set to B. When the movement state is input from the state determining unit 1028, the movement state is a riding-in-car state, and the movement speed of the user is a high speed, the positioning time interval is set to C. When the movement state is input from the state determining unit 1028, the movement state is a riding-on-train state, and the movement speed of the user is a low speed, the positioning time interval is set to D. When the movement state is input from the state determining unit 1028, the movement state is a riding-on-train state, and the movement speed of the user is a high speed, the positioning time interval is set to E. In Fig. 15, the relationship among A, B, C, D, and E may be A<B<C<D<E or A<B<C=D<E.

In addition, in this embodiment, the movement state and the movement speed may be determined based on acceleration information.

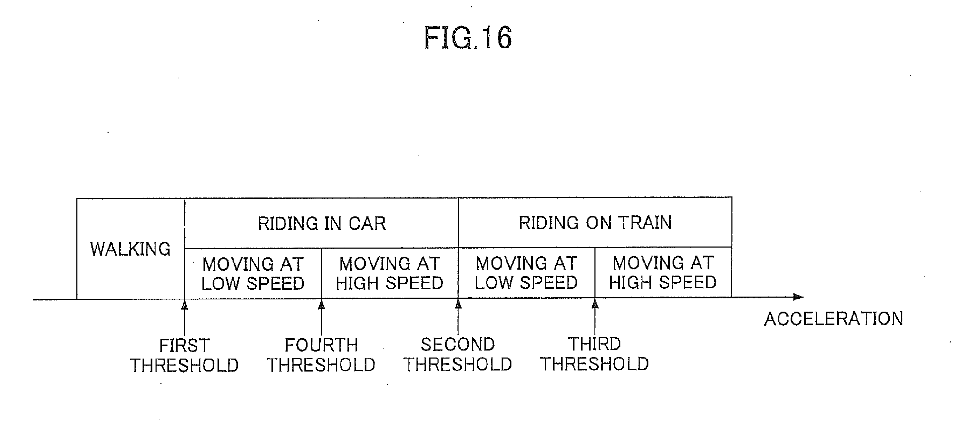

Fig. 16 shows an example of determining the movement state and the movement speed based on acceleration information.

For example, based on acceleration information, when acceleration is less than a predetermined first threshold, it is determined that the user is walking. When acceleration is greater than or equal to the predetermined first threshold and less than a predetermined fourth threshold, it is determined that the user is riding in a car moving at a low speed. When acceleration is greater than or equal to the predetermined fourth threshold and less than a predetermined second threshold, it is determined that the user is riding in a car moving at a high speed. When acceleration is greater than or equal to the predetermined second threshold and less than a predetermined third threshold, it is determined that the user is riding on a train moving at a low speed. When acceleration is greater than or equal to the predetermined third threshold, it is determined that the user is riding in a train moving at a high speed. In this example, the relationship among the first threshold, the second threshold, the third threshold, and the fourth threshold is the first threshold < the fourth threshold < the second threshold < the third threshold.

According to this embodiment, there is provided a positioning time interval control device for controlling a time interval for measuring a position.

The positioning time interval control device includes:
an obtaining unit, as a positioning time interval setting unit, configured to obtain a movement state and a movement speed of a mobile terminal; and
the positioning time interval setting unit configured to set the time interval for measuring the position of the mobile terminal and a time interval for outputting position information derived from the measurement based on the movement state and the movement speed of the mobile terminal obtained by the obtaining unit; wherein
the positioning time interval setting unit changes the time intervals when the movement state and/or the movement speed of the mobile terminal is changed; and
at the time interval set by the positioning time interval setting unit, the mobile terminal obtains the position information of the mobile terminal and outputs the position information.

The positioning time interval control device further includes:
a serving base station information obtaining unit, as a state determining unit, configured to obtain information about a serving base station covering an area within which the mobile terminal is situated;
a movement state detecting unit, as the state determining unit, configured to detect a movement state of a user carrying the mobile terminal; and
a movement speed estimating unit, as the state determining unit, configured to estimate the movement speed of the mobile terminal based on the number of times that the serving base station is changed during a predetermined time length, which is obtained by the serving base station information obtaining unit; wherein
the obtaining unit obtains the movement state detected by the movement state detecting unit and the movement speed of the mobile terminal estimated by the movement speed estimating unit.

In addition, the positioning time interval setting unit sets the time interval for measuring the position of the mobile terminal and the time interval for outputting position information derived from the measurement longer with an increase in the movement speed of the mobile terminal.

Furthermore, the mobile terminal outputs the movement state and the movement speed of the mobile terminal obtained by the obtaining unit.

According to this embodiment, there is provided a positioning time interval control method in a positioning time interval control device for controlling a time interval for measuring a position.

The positioning time interval control method includes the steps of:
obtaining a movement state and a movement speed of a mobile terminal; and
setting the time interval for measuring the position of the mobile terminal and a time interval for outputting position information derived from the measurement based on the movement state and the movement speed of the mobile terminal obtained in the obtaining step; wherein
the setting step comprises changing the time intervals when the movement state and/or the movement speed of the mobile terminal is changed; and
at the time interval set in the setting step, the mobile terminal obtains the position information of the mobile terminal and outputs the position information.

In the above description, some specific numerical values are used for better understanding of the present invention. Unless specifically indicated, however, these numerical values are merely illustrative and any other suitable values may be used.

The present invention has been described with reference to the specific embodiments, but the embodiments are merely illustrative and variations, modifications, alterations and, substitutions could be made by those skilled in the art. For convenience of explanation, apparatuses according to the embodiments of the present invention have been described with reference to functional block diagrams, but these apparatuses may be implemented in hardware, software or combinations thereof. The present invention is not limited to the above embodiments, and variations, modifications, alterations, and substitutions can be made by those skilled in the art without deviating from the spirit of the present invention.

This international patent application is based on Japanese Priority Application No. 2010-032580 filed on February 17, 2010, the entire contents of which are incorporated herein by reference.

### [DESCRIPTION OF NOTATIONS]

100 mobile terminal
102 CPU (central processing unit)
104 storage unit
106 input unit
108 output unit
110 communication unit
112 GPS receiver
114 sensor
200 base station
300 communication network
400 service provider apparatus
402 positioning time interval setting unit
404 positioning time interval reporting unit
500₁-500ₙ (n is an integer larger than 3) GPS satellites
1022 serving base station information obtaining unit
1024 walking detecting unit
1026 movement state detecting unit
1028 state determining unit
1030 positioning time interval setting unit
1032 positioning unit
1034 position report determining unit
1036 position reporting unit

## Claims

1. A positioning time interval control device for controlling a time interval for measuring a position, comprising:
an obtaining unit configured to obtain a movement state and a movement speed of a mobile terminal; and
a positioning time interval setting unit configured to set the time interval for measuring the position of the mobile terminal and a time interval for outputting position information derived from the measurement based on the movement state and the movement speed of the mobile terminal obtained by the obtaining unit; wherein
the positioning time interval setting unit changes the time intervals when the movement state and/or the movement speed of the mobile terminal is changed; and
at the time interval set by the positioning time interval setting unit, the mobile terminal obtains the position information of the mobile terminal and outputs the position information.

2. The positioning time interval control device as claimed in claim 1, further comprising:
a serving base station information obtaining unit configured to obtain information about a serving base station covering an area within which the mobile terminal is situated;
a movement state detecting unit configured to detect a movement state of a user carrying the mobile terminal; and
a movement speed estimating unit configured to estimate the movement speed of the mobile terminal based on the number of times that the serving base station is changed during a predetermined time length, which is obtained by the serving base station information obtaining unit; wherein
the obtaining unit obtains the movement state detected by the movement state detecting unit and the movement speed of the mobile terminal estimated by the movement speed estimating unit.

3. The positioning time interval control device as claimed in claim 1, wherein:
the positioning time interval setting unit sets the time interval for measuring the position of the mobile terminal and the time interval for outputting position information derived from the measurement longer with an increase in the movement speed of the mobile terminal.

4. The positioning time interval control device as claimed in claim 1, wherein:
the mobile terminal outputs the movement state and the movement speed of the mobile terminal obtained by the obtaining unit.

5. A positioning time interval control method in a positioning time interval control device for controlling a time interval for measuring a position, comprising the steps of:
obtaining a movement state and a movement speed of a mobile terminal; and
setting the time interval for measuring the position of the mobile terminal and a time interval for outputting position information derived from the measurement based on the movement state and the movement speed of the mobile terminal obtained in the obtaining step; wherein
the setting step comprises changing the time intervals when the movement state and/or the movement speed of the mobile terminal is changed; and
at the time interval set in the setting step, the mobile terminal obtains the position information of the mobile terminal and outputs the position information.
